Europäisches Patentamt

European Patent Office

Office européen des brevets

(19)

(11) **EP 1 595 453 A1**

(12) **EUROPEAN PATENT APPLICATION**

(43) Date of publication:
**16.11.2005 Bulletin 2005/46**

(51) Int Cl.$^7$: **A21B 3/04**

(21) Application number: **04425328.4**

(22) Date of filing: **10.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicants:
• **SMEG S.p.A.**
**I-42016 Guastalla (IT)**
• **Oikytech S.r.l.**
**20123 Milano (IT)**

(72) Inventors:
• **Lacaita, Andrea Leonardo**
**20133 Milano (IT)**

• **Milani, Marco**
**23900 Lecco (IT)**
• **Rigamonti, Matteo**
**20045 Besana Brianza (IT)**
• **Zambruni, Carlo**
**26041 Casalmaggiore (IT)**

(74) Representative: **Jorio, Paolo et al**
**STUDIO TORTA S.r.l.**
**Via Viotti, 9**
**10121 Torino (IT)**

(54) **Automatic control method of baking food products in an oven, and automatically controlled oven**

(57) A method of automatically baking food products in an oven (1) having a baking cavity (2) includes the steps of: commencing, at a predetermined start instant ($T_I$), baking of a food product (3) inside the baking cavity (2) of the oven (1); monitoring a humidity level inside the baking cavity (2) after the start instant ($T_I$); determining a maximum instant ($T_{MAX}$) in which the humidity level reaches a maximum value ($H_{MAX}$); and calculating the duration of a first time interval ($\Delta T_1$) between the start instant ($T_I$) and the maximum instant ($T_{MAX}$). The duration of a second time interval ($\Delta T_2$) is then calculated on the basis of the duration of the first time interval ($\Delta T_1$), and baking of the food product (3) is terminated at the end of the second time interval ($\Delta T_2$).

Fig.1

EP 1 595 453 A1

## Description

The present invention relates to an automatic control method of baking food products in an oven, and to an automatically controlled oven.

As is known, one of the problems encountered in automatically controlled baking of food products in an oven is determining one or more parameters related to the baking status of the product, and by which to estimate total bake time. By way of a solution to the problem, baking control methods have been proposed based, for example, on determining the weight of the product or the concentration of given substances inside the oven cavity when baking the product. It is known, in fact, that, when heated, food products lose water and therefore get gradually lighter, and, at the same time, volatile compounds (aromas) are released and remain suspended in the air inside the oven cavity.

In most cases, however, the above parameters do not have a consistent enough pattern, so that known methods only apply to a small range of products, are rarely adaptable to products of different types, and are therefore unreliable and unsatisfactory in terms of results (products are either under- or overbaked).

Moreover, actual implementation of some known control methods calls for the use of high-cost sensors.

It is an object of the present invention to provide an automatic control method of baking food products in an oven, and an automatically controlled oven, designed to eliminate the aforementioned drawbacks, and which in particular are reliable regardless of the type of food product for baking.

According to the present invention, there is provided a method of automatically baking food products in an oven having a baking cavity, the method comprising the steps of:

commencing, at a predetermined start instant, baking of a food product inside the baking cavity of the oven; and
monitoring a humidity level inside the baking cavity after the start instant;
and being characterized by comprising the steps of:

determining a maximum instant in which the humidity level reaches a maximum value;
calculating the duration of a first time interval between the start instant and the maximum instant;
calculating the duration of a second time interval on the basis of the duration of the first time interval; and
terminating baking of the food product at the end of the second time interval.

In other words, according to the invention, the second time interval, at the end of which baking is terminated, is calculated regardless of the humidity level inside the baking cavity after the maximum value is reached, so that the method can be used for baking food products of any type.

According to another aspect of the invention, the duration of the second time interval is proportional to the duration of the first time interval, and can therefore be calculated quickly and easily. Moreover, by selecting a proportionality constant within a limited set of values, the duration of the second time interval (and therefore total bake time) can be optimized for different groups of food products on the basis of practical characterization tests.

According to the invention, there is also provided an oven for baking food products, comprising a baking cavity; a humidity sensor for measuring a humidity level inside the baking cavity; and a control device; characterized in that the control device comprises:

a first computing unit for determining a maximum instant in which the humidity level measured by the humidity sensor reaches a maximum value;
a second computing unit for calculating a first time interval between a predetermined start instant, in which baking of a food product inside the baking cavity is commenced, and the maximum instant;
a third computing unit for calculating the duration of a second time interval on the basis of the duration of the first time interval; and
a control unit for terminating baking of the food product inside the baking cavity at the end of the second time interval.

A non-limiting embodiment of the invention will be described by way of example with reference to the accompanying drawings, in which:

Figure 1 shows a simplified block diagram of an oven in accordance with the present invention;
Figure 2 shows a graph of quantities relative to the method according to the present invention;
Figure 3 shows an enlarged detail of the Figure 2 graph.

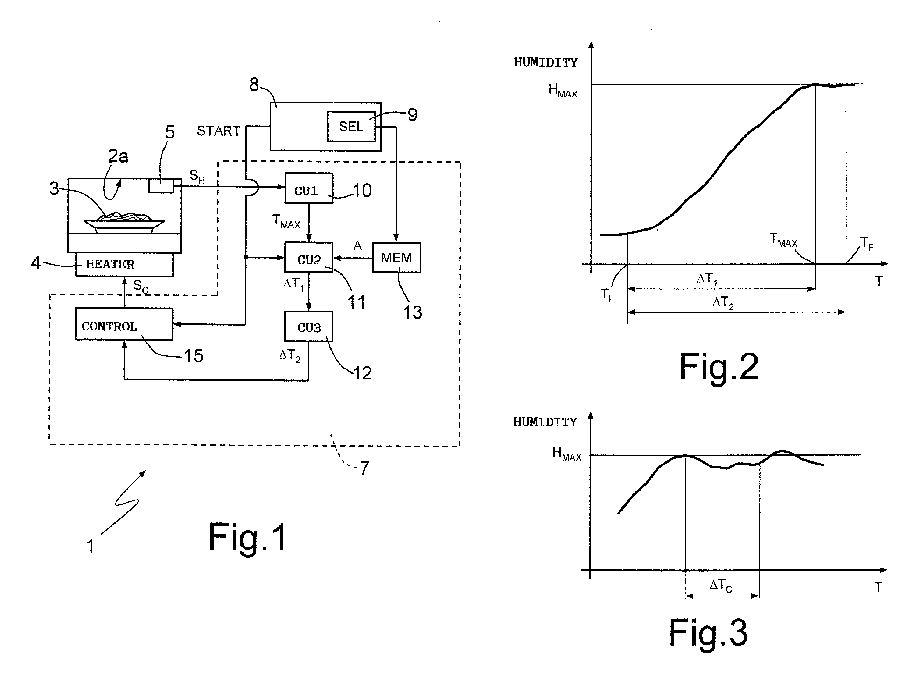

With reference to Figure 1, number 1 indicates as a whole an oven for baking food products, and which comprises a baking cavity 2 for housing food products 3 for baking; an electric or gas heater 4 associated with cavity 2; a humidity sensor 5; and a control device 7. Oven 1 also comprises a user-operated control block 8 having a selector 9 for selecting baking mode on the basis of groups of food products, in addition to the usual temperature setting and conventional baking mode controls (not shown).

Sensor 5 is preferably a gas/vapour sensor, and is housed inside baking cavity 2, preferably on a top wall 2a. Alternatively, sensor 5 may be located outside cavity 2 and connected to it by a conduit. Sensor 5 is also connected to control device 7, and supplies a humidity signal $S_H$ related to the humidity level inside cavity 2.

Control device 7 comprises three cascade-connected computing units 10, 11, 12; a memory 13; and a control unit 15.

Computing unit 10 is connected to sensor 5 to receive humidity signal $S_H$, and supplies computing unit 11 with a maximum instant $T_{MAX}$ related to humidity signal $S_H$ and associated with a maximum value $H_{MAX}$ of the humidity level inside cavity 2 (see also Figure 2).

Computing unit 11 is supplied by control block 8 with a START pulse, on the basis of which a bake start instant $T_I$ (Figure 2) is determined; and computing unit 11 calculates the duration of a first time interval between bake start instant $T_I$ and maximum instant $T_{MAX}$ (partial bake time $\Delta T_1$).

Computing unit 12 receives partial bake time $\Delta T_1$ from computing unit 11, and a proportionality coefficient A from memory 13, as explained in detail later on, and uses them to calculate the duration of a second time interval (total bake time $\Delta T_2$, Figure 2) according to the equation:

$$\Delta T_2 = A * \Delta T_1 \qquad (1)$$

In other words, total bake time $\Delta T_2$ is the time taken to bake food product 3, and is calculated as of bake start instant $T_1$.

Total bake time $\Delta T_2$ is supplied to control unit 15 which, by means of a control signal $S_C$, controls operation of heater 4. More specifically, control unit 15 turns heater 4 on at bake start instant $T_1$, and off at a bake end instant $T_F$, at the end of total bake time $\Delta T_2$.

Memory 13 stores a number of predetermined values of proportionality coefficient A, which are related to the total bake times of respective groups of food products, and are all strictly greater than 1. The value of proportionality coefficient A supplied to computing unit 12 can be selected using selector 9, to which memory 13 is connected.

The value of proportionality coefficient A is determined on the basis of practical characterization tests.

Food product 3 is baked as follows. First, the user, using selector 9, sets the baking mode according to the product group of food product 3 inside baking cavity 2 of oven 1. In other words, from the proportionality coefficient A values stored in memory 13, the user selects one suitable for the product group of food product 3 to be baked; and the selected proportionality coefficient A value is supplied to computing unit 12.

The user then operates a known bake start control (not shown) in control block 8, which generates a START pulse; and computing unit 11 identifies and memorizes the bake start instant $T_I$ in which the START pulse is received. At the same time, control unit 15 turns on heater 4, and computing unit 10 starts monitoring the humidity level inside baking cavity 2. More specifically, computing unit 10 monitors the value of humidity signal $S_H$ supplied by humidity sensor 5 and related to the humidity level inside cavity 2.

As it is baked, food product 3 releases water in the form of steam, which increases the humidity level inside the cavity up to maximum instant $T_{MAX}$, in which the maximum humidity level value $H_{MAX}$ is reached. The terms "maximum instant" and "maximum humidity level value" are to be understood in the sense that, after maximum instant $T_{MAX}$, there is no longer any noticeable increase in humidity level, which thereafter either decreases or remains substantially constant, possibly oscillating slightly about maximum value $H_{MAX}$ (as shown in Figure 2).

Computing unit 10 determines maximum instant $T_{MAX}$ by determining the instants in which the humidity level in baking cavity 2 reaches relative maximums; and maximum instant $T_{MAX}$ is the instant corresponding to the first relative maximum not exceeded for at least a predetermined control time interval $\Delta T_C$ (Figure 3).

Computing unit 11 then calculates partial bake time $\Delta T_1$ as of bake start instant $T_I$ and maximum instant $T_{MAX}$, and computing unit 12 estimates total bake time $\Delta T_2$ on the basis of partial bake time $\Delta T_1$ and according to equation (1). Total bake time $\Delta T_2$ is thus estimated regardless of the humidity level pattern after maximum value $H_{MAX}$ is reached, and is related solely to partial bake time $\Delta T_1$. As stated, the humidity level pattern is not the same for different food products, whereas the ratio between total bake time $\Delta T_2$ and partial bake time $\Delta T_1$ (i.e. proportionality coefficient A) is substantially the same for each group of food products (e.g. meat, fish, vegetables, pulses). Consequently, a relatively small set of proportionality coefficient A values need simply be stored in memory 13 to accurately estimate total bake time $\Delta T_2$ of any type of food product.

Control unit 15 continues operating heater 4 up to the end of total bake time $\Delta T_2$; at which point, heater 4 is turned off by control signal $S_C$, and baking of food product 3 is terminated.

The quantities to be monitored during baking were determined as follows. An electric test oven was equipped with a number of sensors, including sensors for detecting concentrations of respective substances in air, temperature sensors, and a load cell. More specifically, of the first type, humidity sensors and MOS gas sensors for detecting the presence and concentration of various types of alcohol vapour, were used.

Products in one food category were then test baked at different temperatures, and the signals from the sensors in each case were recorded. Using the known PCA (Principal Component Analysis) technique, not described here in detail, the principal components accounting for the variation in time of the data collected in each test were determined in N-dimensional space (N being the number of sensors used and, therefore, the number of sets of data collected in each test). Synthetic sensors associated with and describing the time pattern of the principal components were also defined. That is, the synthetic sensor responses are linear combinations of the responses of the individual sensors used, of the type:

$$S_{SYN}(t) = A_1 S_1(t) + A_2 S_2(t) + ... + A_N S_N(t)$$

where $S_{SYN}(t)$ is the response of the synthetic sensor; $S_1(t)$, $S_2(t)$, ..., $S_N(t)$ are the responses of the various sensors used; and $A_1$, $A_2$, ..., $A_N$ are respective weights associated with them. Weights $A_1$, $A_2$, ..., AN were extracted from the matrix defining the PCA coordinate transformation (axis rotation).

Comparison of the principal component synthetic sensor response and the humidity and alcohol vapour sensor responses showed the time patterns to be qualitatively similar and to show a maximum after an initial transient state; and optimum baking is achieved by prolonging heating of the product in the oven beyond the instant corresponding to the maximum of the sensor responses. From which, it was deduced that even one sensor may be sufficient to acquire significant information by which to determine the baking status of the product.

Baking tests were then conducted of food products from different categories, such as vegetables, different types and cuts of meat, fish, and mixed dishes (e.g. pizza or pies), and showed that, of the sensors used, the humidity sensor is the one which performs most consistently with respect to different categories of food products, and is therefore considered the most suitable for baking control purposes. That is, response of the humidity sensor is practically unaffected by the category of the food product, and the ratio between total bake time $\Delta T_2$ and partial bake time $\Delta T_1$ is substantially constant, in accordance with equation (1).

Clearly, changes may be made to the method and oven as described herein without, however, departing from the scope of the present invention.

In particular, the humidity sensor may be replaced by various sensors, e.g. for detecting the presence and concentration in air of substances such as aromatic compounds, alkanes, alcohol, methane, organic compounds (limonene, pyrazine), inorganic sulphur compounds ($H_2S$), nitric oxide, ozone, hydrogen.

**Claims**

1. A method of automatically baking food products in an electric or gas oven (1) having a baking cavity (2) comprising an electric or gas heater (4); the method comprising the steps of:

commencing, at a predetermined start instant ($T_I$), baking of a food product (3) inside the baking cavity (2) of the oven (1); and
monitoring the concentration in air of a substance inside the baking cavity (2) after the start instant ($T_I$);
and being **characterized by** comprising the steps of:

determining a maximum instant ($T_{MAX}$) in which the concentration of the substance reaches a maximum value ($H_{MAX}$);
calculating the duration of a first time interval ($\Delta T_1$) between the start instant ($T_I$) and the maximum instant ($T_{MAX}$);
calculating the duration of a second time interval ($\Delta T_2$) on the basis of the duration of the first time interval ($\Delta T_1$); and
terminating baking of the food product (3) at the end of the second time interval ($\Delta T_2$).

2. A method as claimed in Claim 1, **characterized in that** the duration of the second time interval ($\Delta T_2$) is proportional to the duration of the first time interval ($\Delta T_1$).

3. A method as claimed in Claim 2, **characterized in that** the second time interval ($\Delta T_2$) is calculated as of the start instant ($T_I$).

4. A method as claimed in Claim 3, **characterized in that** the duration of the second time interval ($\Delta T_2$) is calculated according to the equation :

$$\Delta T_2 = A * \Delta T_1$$

where $\Delta T_1$ is the duration of the first time interval, $\Delta T_2$ is the duration of the second time interval, and A is a proportionality coefficient strictly greater than 1.

5. A method as claimed in Claim 3 or 4, **characterized in that** a value of the proportionality coefficient (A) is selected within a predetermined set of values.

6. A method as claimed in Claim 5, **characterized in that** the values of the proportionality coefficient (A) indicate total bake times of respective groups of food products.

7. A method as claimed in any one of the foregoing Claims, **characterized in that** the concentration monitoring step comprises monitoring a humidity level.

8. An oven for baking food products, comprising a baking cavity (2) having an electric or gas heater (4); a substance concentration sensor (5) for measuring the concentration in air of a substance inside the baking cavity (2); and a control device (7); **characterized in that** the control device (7) comprises:

> a first computing unit (10) for determining a maximum instant ($T_{MAX}$) in which the concentration measured by the concentration sensor (5) reaches a maximum value ($H_{MAX}$);
> a second computing unit (11) for calculating a first time interval ($\Delta T_1$) between a predetermined start instant ($T_I$), in which baking of a food product (3) inside the baking cavity (2) is commenced, and the maximum instant ($T_{MAX}$);
> a third computing unit (12) for calculating the duration of a second time interval ($\Delta T_2$) on the basis of the duration of the first time interval ($\Delta T_1$); and
> a control unit (15) for terminating baking of the food product (3) inside the baking cavity (2) at the end of the second time interval ($\Delta T_2$).

9. An oven as claimed in Claim 8, **characterized in that** the duration of the second time interval ($\Delta T_2$) is proportional to the duration of the first time interval ($\Delta T_1$).

10. An oven as claimed in Claim 9, **characterized in that** the duration of the second time interval ($\Delta T_2$) is calculated according to the equation :

$$\Delta T_2 = A * \Delta T_1$$

where $\Delta T_1$ is the duration of the first time interval, $\Delta T_2$ is the duration of the second time interval calculated as of the maximum instant ($T_{MAX}$), and A is a proportionality coefficient strictly greater than 1.

11. An oven as claimed in Claim 10, **characterized in that** the control device (7) comprises memory means (13) for storing a number of predetermined values of the proportionality coefficient (A).

12. An oven as claimed in Claim 10 or 11, **characterized in that** the values of the proportionality coefficient (A) indicate total bake times of groups of food products.

13. An oven as claimed in any one of Claims 8 to 12, **characterized in that** the concentration sensor (5) is a humidity sensor.

Fig.1

Fig.2

Fig.3

EP 1 595 453 A1

European Patent
Office

**EUROPEAN SEARCH REPORT**

Application Number

EP 04 42 5328

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 395 633 A (LEE DO Y) 7 March 1995 (1995-03-07) * the whole document * ----- | 1-5,8-10 | A21B3/04 |
| A | US 5 155 339 A (AN SEONG WAN) 13 October 1992 (1992-10-13) * the whole document * ----- | 1-5, 7-10,13 | |
| A | US 4 814 570 A (TAKIZAKI TAKESHI) 21 March 1989 (1989-03-21) * the whole document * ----- | 1,7,8,13 | |
| A | US 4 582 971 A (UEDA SHIGEKI) 15 April 1986 (1986-04-15) * the whole document * ----- | 1,7,8,13 | |
| A | US 5 349 163 A (AN SEONG-WAN) 20 September 1994 (1994-09-20) ----- | | |
| A | US 4 864 088 A (HIEJIMA KIYOSHI  ET AL) 5 September 1989 (1989-09-05) ----- | | TECHNICAL FIELDS SEARCHED (Int.Cl.7) |
| A | US 4 484 065 A (UEDA SHIGEKI) 20 November 1984 (1984-11-20) ----- | | A21B H05B |
| A | US 5 369 253 A (KUWATA KYOKO  ET AL) 29 November 1994 (1994-11-29) ----- | | |

The present search report has been drawn up for all claims

| Place of search | Date of completion of the search | Examiner |
|---|---|---|
| The Hague | 23 December 2004 | Silvis, H |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**          EP 04 42 5328

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2004

| Patent document cited in search report | | Publication date | Patent family member(s) | | Publication date |
|---|---|---|---|---|---|
| US 5395633 | A | 07-03-1995 | CA | 2111058 A1 | 10-06-1995 |
| US 5155339 | A | 13-10-1992 | JP | 2504878 B2 | 05-06-1996 |
| | | | JP | 7313075 A | 05-12-1995 |
| | | | US | 5349163 A | 20-09-1994 |
| US 4814570 | A | 21-03-1989 | JP | 1965846 C | 25-08-1995 |
| | | | JP | 6097096 B | 30-11-1994 |
| | | | JP | 62218734 A | 26-09-1987 |
| | | | CA | 1271798 A1 | 17-07-1990 |
| | | | DE | 3775951 D1 | 27-02-1992 |
| | | | EP | 0238022 A2 | 23-09-1987 |
| | | | KR | 9006796 B1 | 21-09-1990 |
| US 4582971 | A | 15-04-1986 | JP | 1646939 C | 13-03-1992 |
| | | | JP | 3011371 B | 15-02-1991 |
| | | | JP | 60164128 A | 27-08-1985 |
| | | | JP | 60170188 A | 03-09-1985 |
| | | | JP | 1042598 B | 13-09-1989 |
| | | | JP | 1563878 C | 12-06-1990 |
| | | | JP | 60170189 A | 03-09-1985 |
| | | | AU | 551298 B2 | 24-04-1986 |
| | | | AU | 3844085 A | 15-08-1985 |
| | | | CA | 1220529 A1 | 14-04-1987 |
| | | | DE | 3571296 D1 | 03-08-1989 |
| | | | EP | 0157473 A1 | 09-10-1985 |
| US 5349163 | A | 20-09-1994 | JP | 2504878 B2 | 05-06-1996 |
| | | | JP | 7313075 A | 05-12-1995 |
| | | | US | 5155339 A | 13-10-1992 |
| US 4864088 | A | 05-09-1989 | JP | 1239322 A | 25-09-1989 |
| | | | JP | 1924551 C | 25-04-1995 |
| | | | JP | 6052130 B | 06-07-1994 |
| | | | JP | 1014523 A | 18-01-1989 |
| | | | JP | 2572987 B2 | 16-01-1997 |
| | | | JP | 1023029 A | 25-01-1989 |
| | | | JP | 2527565 B2 | 28-08-1996 |
| | | | JP | 1038527 A | 08-02-1989 |
| | | | JP | 2527566 B2 | 28-08-1996 |
| | | | DE | 3822590 A1 | 16-03-1989 |
| | | | FR | 2617663 A1 | 06-01-1989 |
| | | | GB | 2206425 A ,B | 05-01-1989 |
| | | | KR | 9106173 B1 | 16-08-1991 |
| US 4484065 | A | 20-11-1984 | JP | 1616349 C | 30-08-1991 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 04 42 5328

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2004

| Patent document cited in search report | | Publication date | Patent family member(s) | | Publication date |
|---|---|---|---|---|---|
| US 4484065 | A | | JP | 2019377 B | 01-05-1990 |
| | | | JP | 58075629 A | 07-05-1983 |
| | | | AU | 533594 B2 | 01-12-1983 |
| | | | AU | 8880782 A | 19-05-1983 |
| | | | CA | 1194584 A1 | 01-10-1985 |
| | | | DE | 3277795 D1 | 14-01-1988 |
| | | | EP | 0078607 A2 | 11-05-1983 |
| US 5369253 | A | 29-11-1994 | JP | 2937408 B2 | 23-08-1999 |
| | | | JP | 4013009 A | 17-01-1992 |
| | | | JP | 2898716 B2 | 02-06-1999 |
| | | | JP | 4086417 A | 19-03-1992 |
| | | | EP | 0455169 A2 | 06-11-1991 |

EPO FORM P0459

For more details about this annex : see Official Journal of the European Patent Office, No. 12/82